Europäisches Patentamt

European Patent Office

Office européen des brevets

(19)

(11) EP 0 993 748 B1

(12) **EUROPÄISCHE PATENTSCHRIFT**

(45) Veröffentlichungstag und Bekanntmachung des Hinweises auf die Patenterteilung:
**20.06.2001 Patentblatt 2001/25**

(21) Anmeldenummer: **98940133.6**

(22) Anmeldetag: **03.07.1998**

(51) Int Cl.⁷: **H04Q 7/32**, G06K 19/077

(86) Internationale Anmeldenummer:
**PCT/EP98/04133**

(87) Internationale Veröffentlichungsnummer:
**WO 99/02002 (14.01.1999 Gazette 1999/02)**

(54) **KOMMUNIKATIONSEINSTECKKARTE**

PLUG-IN TELECOMMUNICATION CARD

CARTE ENFICHABLE DE TELECOMMUNICATION

(84) Benannte Vertragsstaaten:
**AT BE CH CY DE DK ES FI FR GB GR IE IT LI LU MC NL PT SE**

(30) Priorität: **03.07.1997 DE 29711698 U**

(43) Veröffentlichungstag der Anmeldung:
**19.04.2000 Patentblatt 2000/16**

(73) Patentinhaber: **Dosch & Amand GmbH & Co. KG**
**81927 München (DE)**

(72) Erfinder: **DOSCH, Franz**
**D-83026 Rosenheim (DE)**

(74) Vertreter: **Grünecker, Kinkeldey,**
**Stockmair & Schwanhäusser Anwaltssozietät**
**Maximilianstrasse 58**
**80538 München (DE)**

(56) Entgegenhaltungen:
**EP-A- 0 500 331          WO-A-95/34958**
**US-A- 5 345 367**

**Beschreibung**

Die vorliegende Erfindung betrifft eine Kommunikationseinsteckkarte, vorzugsweise PCMCIA - Karte, die zur Funkkommunikation verwendet werden kann. Insbesondere betrifft die vorliegende Erfindung eine derartige Karte, die sich zur Kommunikation im DECT-Standard eignet.

Im Stand der Technik sind PCMCIA-Funkadapter bekannt, mittels denen eine drahtlose Anbindung eines Computers an ein Netzwerk ermöglicht wird. Diese bekannten Funkadapter bestehen im wesentlichen aus zwei Einheiten, nämlich der eigentlichen PCMCIA-Karte sowie aus einem externen Funkmodul, das mit der in die Computereinrichtung eingesteckten PCMCIA-Karte über Kabel verbunden wird. Bekannt sind außerdem PCMCIA - Karten, die zum Zwecke der Funkkommunikation eine auf der Karte integrierte Stabantenne aufweisen.

Aus WO-A-95 34958 ist eine PCMCIA-Karte bekannt, die in eine Computereinrichtung eingesteckt werden kann und zur Funkanbindung dieser Computereinrichtung über einen zellularen Funkstandard dient. Hierzu weist die PCMCIA-Karte eine Antenne auf, die aus dem eigentlichen PCMCIA-Kartenkörper herausragt.

Aus US 5 345 367 A ist eine PCMCIA-Karte mit optischer Betriebszustandsanzeige bekannt. Zur Unterbringung einer LED in dem Kartenkörper wird vorgeschlagen, hierzu eine rechtwinklig abstrahlende LED im Karteninneren zu verwenden, an die eine Lichtleiter angekoppelt ist, der das ausgestrahlte Licht an den Kartenrand weiterleitet.

Es ist die Aufgabe der vorliegenden Erfindung, eine Kommunikationseinsteckkarte anzugeben, die mit geringerem Hardware-Aufwand eine bequem auszuführende und gut zu überwachende Funkkommunikation ermöglicht, und die sich insbesondere zur Funkkommunikation von beweglichen Computern, wie Laptops, im DECT-Standard eignet.

Diese Aufgabe wird durch den Gegenstand des Patentanspruchs 1 gelöst.

Bevorzugte Ausgestaltungen der vorliegenden Erfindung sind Gegenstand der Unteransprüche.

Im folgenden werden bevorzugte Ausführungsformen der erfindungsgemäßen Kommunikationseinsteckkarte unter Bezugnahme auf die beiliegenden Zeichnungen näher erläutert. Dabei zeigen die Zeichnungen im einzelnen:

Fig. 1 eine schematische Darstellung einer erfindungsgemäßen Kommunikationseinsteckkarte zur Funkübertragung im DECT-Standard mit Betriebsstatusanzeige, gebogener Antenne und Streukörper, wobei Antenne und Streukörper einen Griff bilden,

Fig. 2 eine schematische Darstellung einer erfindungsgemäßen Kommunikationseinsteckkarte zur Funkübertragung vorzugsweise im DECT-Standard mit Betriebsstatusanzeige und gebogener Antenne, die in einen unsymmetrischen Griff integriert ist, der als Streukörper für die Betriebsstatusanzeige dient,

Fig. 3 eine schematische Darstellung einer erfindungsgemäßen Kommunikationseinsteckkarte mit Betriebsstatusanzeige und Rahmenantenne, wobei das Kartengehäuse einen Teil der Rahmenantenne bildet.

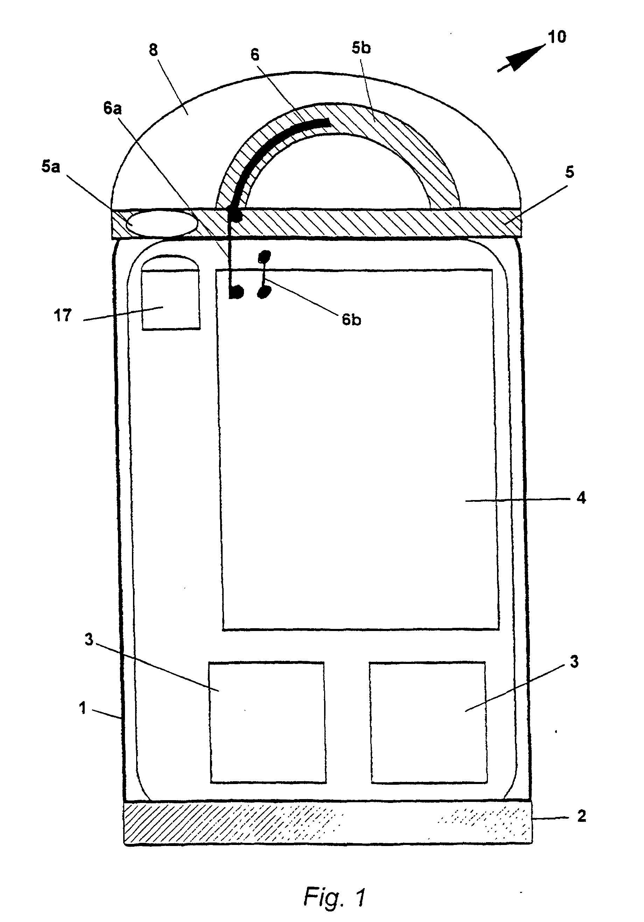

Die vorliegende Erfindung wird im folgenden zunächst anhand der in Fig. 1 gezeigten bevorzugten Ausführungsform erläutert. Fig. 1 zeigt eine Kommunikationseinsteckkarte 1, die neben den für Kommunikationseinsteckkarten üblichen Schaltkreisen 3 ein Sende-/Empfangsmodul 4, eine Antenne 6 sowie eine im wesentlichen durch eine Leuchtdiode 17 und einen Streukörper 8 gebildete Anzeigeneinrichtung aufweist. Das Sende/Empfangsmodul 4 ermöglicht zusammen mit der Antenne 6 eine Funkkommunikation zwischen dem elektrischen Gerät, in das die Karte eingesteckt und über die Steckleiste 2 verbunden ist und einer entfernt liegenden Stelle. Die erfindungsgemäße Karte dient insbesondere zur Funkanbindung portabler Computer, insbesondere Laptops, an Basisstationen eines DECT-Telefonsystems. Entsprechend sind die Antenne sowie die verwendeten Schaltkreise vorzugsweise für Frequenzen im Bereich zwischen 1880 bis 1900 MHz ausgelegt. Die erwähnte Anzeigeneinrichtung informiert den Benutzer über den vorherrschenden Funkstatus. Insbesondere kann die Anzeigeneinrichtung so ausgelegt sein, daß sie den Kommunikationsaufbau mit einer erkannten Basisstation anzeigt. Alternativ oder zusätzlich kann die Anzeigeneinrichtung dazu dienen, eine aktive Datenübertragung anzuzeigen.

Wie in Fig. 1 weiter gezeigt, wird das von der Leuchtdiode 17 erzeugte Licht über eine Öffnung 5a einer Abschlußleiste 5 der Kommunikationseinsteckkarte 1 in einen transparenten Streukörper 8 eingekoppelt, der dadurch insgesamt zum Leuchten gebracht wird. Die Karte 1, die in etwa bis zur Abschlußleiste 5 in das Gehäuse eines Laptops eingeschoben wird, ist somit in der Lage, über den herausstehenden Teil 8 der Anzeigeneinrichtung einem Benutzer während der Bedienung des Laptops Informationen über die Funkstrecke zu vermitteln. Ebenso ermöglicht die aus dem Kartenkörper 1 und somit aus dem Laptop herausragende Antenne 6 eine ungestörte Funkkommunikation zu der erkannten Basisstation. Gemäß der vorliegenden Erfindung ist somit gerade kein zusätzlicher externer Funkadapter zum Aufbau einer Funkkommunikation erforderlich, sondern die Funkkommunikation wird von Bauelementen der Kommunikationseinsteckkarte selbst aufgebaut. Vorzugsweise dient der aus Antenne 6 und Streukörper 8 gebildete und aus dem eigentlichen Kartenkörper herausragende Teil zugleich als Griff, mittels dem die Kommunikationseinsteckkarte bequem in den entsprechenden Laptop eingeschoben und aus diesem wieder herausgezogen werden kann.

Die in Fig. 1 gezeigte Antenne kann technisch als bogenförmige Antenne vor einer leitenden Fläche charakterisiert werden. Bei einer Ausführung als $\lambda$/4-Antenne beträgt die effektive Länge der Antenne 6 für eine Verwendung der Karte im DECT-Standard etwa 4 cm.

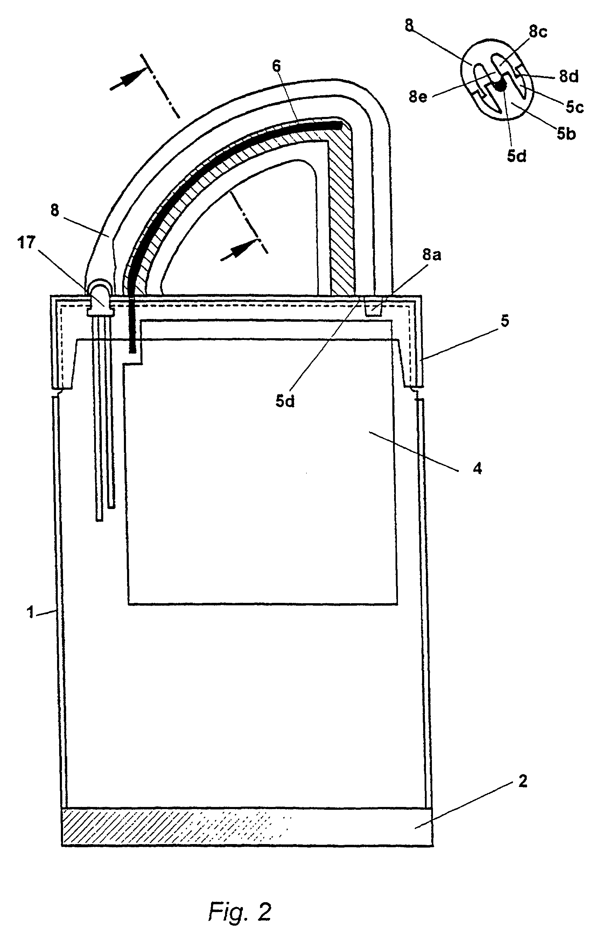

Alternativ zu der in Fig. 1 gezeigten Ausführungsform mit gebogener Antenne können auch Ausführungsformen gemäß den Fig. 2 gewählt werden. Dabei zeigt Fig. 2 eine Ausführungsform, bei der der aus dem Kartenkörper 1 herausragende Teil etwa die Form des oberen Teils eines Buchstabens "D" aufweist und die Antenne vorzugsweise in dem entsprechend gekrümmten Teil untergebracht ist. Aufgrund der unsymmetrischen Anordnung und der Biegung der Antenne ergibt sich eine Richtwirkung etwa in Richtung des eingezeichneten Pfeils 10. Die Richtwirkung kann nun ausgenutzt werden, um die Qualität der Funkstrecke zur Basisstation zu optimieren. in den meisten Fällen dürfte jedoch eine Richtwirkung der Antenne unerwünscht sein, da dies den Benutzer zwingt, die Kommunikationseinsteckkarte und damit den Laptop in einer bestimmten Vorzugsrichtung zu verwenden.

Bei den beiden gezeigten Ausführungsformen gemäß den Figuren 1 und 2 kann die Masse des Funkmoduls 4 über einen Draht 6b mit einer elektrisch leitenden Abschirmung des Kartengehäuses verbunden sein. Die entsprechende Abschirmung bildet dabei eine leitende Ebene für die Antenne.

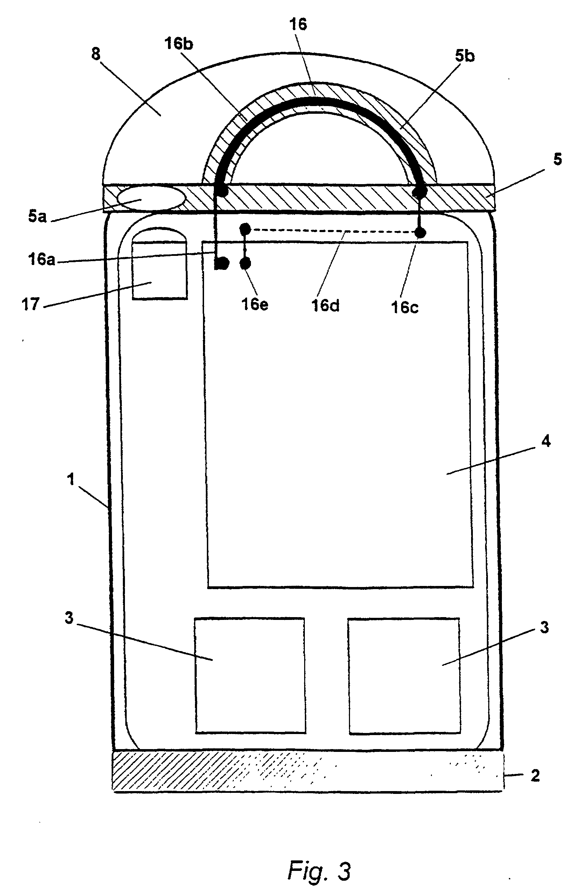

Die Richtcharakteristik einer $\lambda$/4 Stabantenne, die normal zu einer leitenden Fläche steht, weist maximale Empfindlichkeit in der leitenden Ebene auf und minimale Empfindlichkeit normal zur leitenden Ebene, also in Richtung der Stabantenne, auf. Wichtig erscheint nun nicht unbedingt, ein Maximum der Richtcharakteristik auf die Basisstation auszurichten. Auf keinen Fall darf aber eine Nullstelle der Richtcharakteristik auf die Basisstation ausgerichtet sein. Wird nun die Kommunikationseinsteckkarte wie üblich horizontal betrieben, so liegen die beiden Nullstellen ebenfalls in horizontaler Richtung. Soll nun vorwiegend in einer Ebene, also beispielsweise innerhalb eines Stockwerks, Funkkommunikation betrieben werden, so besteht die Gefahr, daß die beiden Richtcharakteristik - Nullstellen der Stabantenne die Funkkommunikation verhindern. Ein eleganter Ansatz zur Lösung dieses Problems liegt in der Verwendung einer Rahmenantenne 16, wie sie beispielhaft in Fig. 3 dargestellt ist. Die Rahmenantenne strahlt bevorzugt in der Ebene des Rahmens ab und weist Richtcharakteristik - Nullstellen lediglich in orthogonaler Ausrichtung in bezug auf die Rahmenebene auf. Die Rahmenantenne besteht aus einer Leiterschleife, die, wie in Fig. 3 gezeigt, aus einer Drahtbrücke 16a, dem Antennenbogen 16b, einer Drahtbrücke 16c, einem elektrischen Pfad 16d in der Abschirmung der Kommunikationseinsteckkarte sowie einer Drahtbrücke 16e gebildet wird.

Alle drei gezeigten Ausführungsformen weisen die Gemeinsamkeit auf, daß die Antenne zumindest teilweise, vorzugsweise im wesentlichen, aus dem eigentlichen Kartenkörper 1 herausragt und daß eine Anzeigeneinrichtung vorgesehen ist, die ermöglicht, daß ein Benutzer in einfacher Weise den angezeigten Betriebszustand der eingesteckten Karte ablesen kann.

Bei den Ausführungsformen gemäß Fig. 1 und 3 ist der die Antenne bildende Metallkörper vorzugsweise von einer Isolationsschicht 5b ummantelt. Bei einer derartigen Lösung könnte diese eigens verwendete Isolationsschicht auch transparent ausgeführt werden und das von der verwendeten Lichtquelle erzeugte Licht in diese Isolationsschicht eingeleitet werden, die damit als Streukörper wirkt. Eine derartige Ausführungsform würde somit ohne einen zusätzlich aufgesteckten Streukörper 8 auskommen.

In den Fig. 1 bis 3 wird die Anzeigeneinrichtung stets durch eine Kombination aus einer Lichtquelle 17, vorzugsweise einer Leuchtdiode, sowie einem Streukörper 8 gebildet. Der Streukörper ist jedoch nicht unbedingt notwendig, wenn die Lichtquelle etwas aus dem Kommunikationseinsteckkartengehäuse  herausragt oder ein kleiner Raumwinkel als ausreichend empfunden wird, aus dem die Anzeigeneinrichtung eingesehen werden kann. Der Streukörper 8 besteht vorzugsweise aus Plexiglas mit definierten Streueigenschaften für Licht. Auf diese Weise wird das Licht der Leuchtdiode 17 umgelenkt und in einen großen Raumwinkel gestreut. Da Kommunikationseinsteckkarten vorzugsweise seitlich in Laptops eingesteckt werden und der Streukörper aus dem Laptop herausragt, kann der Benutzer des Laptops in seiner normaler Arbeitshaltung mit Blick auf den Bildschirm des Laptops zu jeder Zeit den Betriebsstatus der Funkstrecke zur Basisstation erkennen.

Der angezeigte Betriebsstatus umfaßt vorzugsweise zumindest die Information, ob die Kommunikationseinsteckkarte mit Strom versorgt wird. Vorzugsweise wird ferner durch unterschiedliche Farben angezeigt, ob die Kommunikationseinsteckkarte Funkverbindung zu einer Basisstation hat. Beispielsweise wird die Information "Funkverbindung vorhanden" durch eine grüne Farbe und die Information "Funkverbindung nicht vorhanden" durch eine rote Farbe angezeigt.

Vorzugsweise weist das Funkmodul 4 Einrichtungen auf, die eine Bestimmung der Funkstreckenqualität ermöglichen. Als Maß für die Funkstreckenqualität können beispielsweise die Feldstärke, mit der die Basisstation die Antenne der Kommunikationseinsteckkarte erreicht, oder die Bit-Fehlerrate bei der Datenübertragung verwendet werden. Die Funkstreckenqualität wird vorzugsweise ebenfalls in der Betriebszustandsanzeige angezeigt. Beispielsweise kann die Anzeige bei guter Funkverbindung heller sein als bei schlechter Funkverbindung. Alternativ könnte die Funkstreckenqualität durch unterschiedliche Tastverhältnisse dargestellt werden. Ermittelt die Sende/Empfangseinrichtung die Funkstreckenqualität, so kann diese natürlich nicht nur über die Betriebszustandsanzeige angezeigt werden. Vielmehr kann diese Information auch dem angeschlossenen Laptop zur Verfügung gestellt und dort auf dem Bildschirm angezeigt werden.

In den Ausführungsformen gemäß den Figuren 1 und 2 sollten die Kommunikationseinsteckkarte und der Laptop, in den die Kommunikationseinsteckkarte eingesteckt ist, zur Optimierung der Funkstrecke auf die Basisstation ausgerichtet werden. Wird die Karte zusätzlich mit einer Gelenkvorrichtung ausgeführt, um die sich die Antenne relativ zur Karte drehen läßt, so genügt hierfür allein eine Drehung der Antenne um die entsprechende Gelenkvorrichtung.

Der in Fig. 2 dargestellte durch die Antenne und den Streukörper gebildete Griff ist zweigeteilt. Der innere Teil 5e des Antennengriffs bildet ein Spritzgußteil mit der Abschlußleiste 5. Der äußere Teil des Antennengriffs wird durch den Streukörper 8 gebildet. Die Antenne 6 wird zwischen dem inneren Teil 5e und dem äußeren Teil 8 eingeschlossen. Um eine einfache Montage zu gewährleisten, ist der Umlenkkörper 8 mit Widerhaken 8a ausgestattet, die in Öffnungen 5d in der Abschlußleiste eingreifen. Widerhaken 8a und Öffnung 5d befinden sich vorzugsweise auf beiden Seiten der Kommunikationseinsteckkarte bzw. an beiden Enden des Streukörpers 8, also insbesondere auch in der Nähe der Leuchtdiode 17. In der Nähe der Leuchtdiode wurden in Fig. 2 jedoch keine Widerhaken eingezeichnet, um Fig. 2 übersichtlich zu gestalten.

Der innere Teil des Antennengriffs 5e und der Streukörper 8 bestehen vorzugsweise nicht aus Vollmaterial, sondern weisen Hohlräume 5c bzw. 8c auf. Die Hohlräume 5c und 8c führen zu einer Material- und damit Gewichtsersparnis. Der Hauptvorteil ist jedoch darin zu sehen, daß bei den Spritzgußteilen 8 und 5 stark unterschiedliche Materialstärken vermieden werden. Die Materialstärken im Bereich der Abschlußleiste 5 und der Widerhaken 8a betragen etwa 0,5 bis 1,0 mm. Die Dicke des Antennengriffs beträgt im Gegensatz dazu 8 mm, also etwa das Zehnfache. Eine weitgehend konstante Dicke von Spritzgußteilen verhindert unerwünschte Hohlräume (Lunker) und starke mechanische Spannungen nach dem Abkühlen. So werden Stabilität und Maßhaltigkeit der Spritzgußteile erhöht. Ferner sind Lunker im transparenten Streukörper 8 sichtbar und können beim Benutzer durch ihre unregelmäßige Form den Eindruck minderer Qualität erwecken. In die Hohlräume 5c greifen Nasen 8d ein, um ein Verrutschen des Streukörpers 8 gegenüber dem inneren Teil 5e des Antennengriffs zu verhindern. Die Nase 8d des Streukörpers drückt die Antenne in die Nut 5d des inneren Teils des Antennengriffs. Ist die Nut 5d tiefer als der Antennendurchmesser, so können Nut 5d und Nase 8d ebenfalls das Verrutschen von Streukörper 8 gegenüber dem inneren Teil des Antennengriffs 5e verhindern.

Um das Licht der Leuchtdiode 17 in Fig. 2 möglichst effektiv in den Streukörper 8 einzukoppeln, ragt die Leuchtdiode mit ihrem halbkugelförmigen Teil in den Streukörper 8 hinein. Der Streukörper weist eine Aussparung für die Leuchtdiode 17 auf.

Die Abschlußleiste 5 ist vorzugsweise lötbeständig ausgeführt, so daß die Antenne 6 leicht mit dem Funkmodul 4 über den Draht 6a verbunden werden kann. Daraus ergibt sich eine typische Wellenlänge von $\lambda$ = 15,8 cm für Frequenzen von 1,9 GHz des DECT

- Standards. Für bogenförmige Antennen, die aus einer leitenden Fläche herausragen, wird vorzugsweise eine etwas kürzere Länge als $\lambda/4$, also etwa 3.5 cm, verwendet. Die Kommunikationseinsteckkarte selbst ist vorzugsweise als PCMCIA - Karte ausgeführt und hat damit eine Breite von 54 mm und eine Länge von 85,6 mm. Sofern der PCMCIA-Kartentyp III verwendet wird, beträgt die Höhe der Kommunikationseinsteckkarte maximal 10,5 mm. Daraus ergibt sich, daß eine Antennenlänge von 35 mm gut zu den geometrischen Abmessungen der PCMCIA-Karte paßt.

Die Impedanz der Sende-/Empfangseinrichtung muß an die Impedanz der Antenne angepaßt sein. Sende-/Empfangsmodule weisen vorzugsweise eine Impedanz von 50 $\Omega$ auf. Die Impedanz einer dünnen Stabantenne vor einer leitenden Fläche beträgt 40 Q. Hat die Antenne eine endliche Dicke DA und eine Länge I, so kann ihre Impedanz $Z_A$ aus folgender Formel berechnet werden:

$$Z_A = 30\Omega \cdot \ln\left(\frac{1,15 \cdot l}{D_A}\right)$$

Bei Verwendung eines Antennendrahts mit einem Durchmesser von 0,8 bis 1 mm ergibt sich eine Antennenimpedanz von 47 bis 44 Q. Die Bogenform der Antenne führt zu einer geringfügigen weiteren Reduktion der Antennenimpedanz. Trotzdem erscheint diese geringe Fehlanpassung tolerierbar. Idealerweise wird jedoch ein Drehkondensator oder eine Kombination aus Drahtkondensator und Spule zur Anpassung von Antennenimpedanz und Impedanz des Sende-/Empfangsmoduls verwendet.

Die Ausführungsform in Fig. 3. ist mit einer Rahmenantenne 16 ausgestattet. Im Unterschied zur Stabantenne, die primär ein elektrisches Feld erzeugt, erzeugt die Rahmenantenne primär ein magnetisches Feld. Das Magnetfeld entsteht normal zur Rahmenebene. Die Rahmenantenne strahlt vorzugsweise in der Rahmenebene ab. Um die Impedanz der Rahmenantenne an die Impedanz des Sende-/Empfangsmoduls anzupassen, kann die Rahmenantenne aus mehreren Schleifen bestehen. Die Impedanz der Rahmenantenne wird nach folgender Formel berechnet:

$$Z_R = \frac{31000 \cdot n^2 (A/m)^2}{(\lambda/m)^4} \ \Omega$$

Dabei ist n die Zahl der Windungen, A die von der Rahmenantenne eingeschlossene Fläche und λ die Wellenlänge. Die Formel gilt nur, falls die lateralen Abmessungen des Rahmens klein gegenüber der Wellenlänge sind.

**Patentansprüche**

1. Kommunikationseinsteckkarte, vorzugsweise PCMCIA-Karte, wobei die Karte eine Sende- und Empfangseinrichtung (4) sowie eine Antenne (6 oder 16) zur Funkkommunikation aufweist, wobei die Antenne zumindest teilweise aus dem eigentlichen Kartenkörper (1) herausragt, **dadurch gekennzeichnet,** daß die Karte weiterhin eine Anzeigeneinrichtung zum Anzeigen eines Betriebszustands aufweist, wobei die Anzeigeneinrichtung zusammen mit der Antenne in ein Bauteil integriert ist und dieses Bauteil zugleich als Griff für die Kommunikationseinsteckkarte zum Herausziehen der Karte aus dem Gerät ausgelegt ist, in das sie eingesteckt wird, und die Anzeigeneinrichtung eine Ausleuchtung entlang des Verlaufs der Antenne bewirkt.

2. Kommunikationseinsteckkarte nach Anspruch 1, **dadurch gekennzeichnet,** daß, daß der angezeigte Betriebszustand zumindest einen der folgenden Zustände umfaßt:

   - Basisstation erkannt / nicht erkannt
   - Datenübertragung aktiv / nicht aktiv.

3. Kommunikationseinsteckkarte nach Anspruch 2, **dadurch gekennzeichnet,** daß die Funkübertragung gemäß dem DECT - Standard erfolgt und sich damit eine effektive Antennenlänge von etwa 4 cm ergibt.

4. Kommunikationseinsteckkarte nach Ansprüchen 2 oder 3, **dadurch gekennzeichnet,** daß die Karte mit einer Metallschicht abgeschirmt ist und daß diese Metallschicht hochfrequenztechnisch eine leitende Ebene für die Antenne bildet.

5. Kommunikationseinsteckkarte nach einem der Ansprüche 2 bis 4, **dadurch gekennzeichnet,** daß eine Einrichtung zum Klappen, Drehen oder Biegen der Antenne vorgesehen ist, um die Richtwirkung der Antenne zu optimieren.

6. Kommunikationseinsteckkarte nach Anspruch 1 oder 2, **dadurch gekennzeichnet**, daß die Antenne als Rahmenantenne (16) ausgeführt ist.

7. Kommunikationseinsteckkarte nach Anspruch 6, **dadurch gekennzeichnet,** daß die Rahmenantenne bogenförmig ausgeführt ist.

8. Kommunikationseinsteckkarte nach einem der Ansprüche 6 oder 7, **dadurch gekennzeichnet,** daß die Geometrie der Rahmenantenne auf Frequenzen um 1,9 GHz für Funkübertragung im DECT - Standard abgestimmt ist.

9. Kommunikationseinsteckkarte nach einem der Ansprüche 1 bis 8, **dadurch gekennzeichnet,** daß die Antenne (6 oder 16) von einer Isolationsschicht überzogen ist.

10. Kommunikationseinsteckkarte nach Anspruch 1 oder 2, **dadurch gekennzeichnet,** daß die Anzeigeneinrichtung mindestens eine Leucht- oder Laserdiode (17) aufweist.

11. Kommunikationseinsteckkarte nach dem Anspruch 10, **dadurch gekennzeichnet,** daß die Anzeigeneinrichtung mindestens eine Leucht - oder Laserdiode (17) sowie ein Umlenkmittel (8) zum Umlenken des von der Leucht - oder Laserdiode erzeugten Lichts aufweist.

12. Kommunikationseinsteckkarte nach Anspruch 11, **dadurch gekennzeichnet,** daß die Anzeigeneinrichtung im eingesteckten Zustand der Karte sowie bei normaler Arbeitshaltung des Benutzers ausschließlich über die Umlenkmittel (8) einsehbar ist.

13. Kommunikationseinsteckkarte nach Anspruch 11 oder 12, **dadurch gekennzeichnet,** daß die Umlenkmittel durch die die Antenne umhüllende elektrische Isolierung gebildet sind.

14. Kommunikationseinsteckkarte nach Anspruch 11, 12 oder 13, **dadurch gekennzeichnet,** daß die Umlenkmittel (8) transparent sind und Licht definiert streuen.

15. Kommunikationseinsteckkarte nach einem der Ansprüche 11 bis 14, **dadurch gekennzeichnet,** daß der Querschnitt der Umlenkmittel mit dem Abstand von der Leucht- oder Laserdiode abnimmt, um eine gleichmäßige Abstrahlung des in das Umlenkmittel eingekoppelten Lichts zu unterstützen.

16. Kommunikationseinsteckkarte nach einem der Ansprüche 1 bis 15, **dadurch gekennzeichnet,** daß die Form des Griffs etwa die Form der oberen Hälfte eines Buchstabens "D" oder die Form eines Buchstabens "C" aufweist.

17. Kommunikationseinsteckkarte nach den Ansprüchen 1 bis 16, **dadurch gekennzeichnet,** daß der Griff im wesentlichen aus zwei Teilen, nämlich einem inneren (5b) und einen äußeren besteht, wobei der innere Teil fest mit dem Kartenkörper verbunden ist und der äußere Teil des Griffs kappenförmig auf den internen Teil gesteckt wird und wobei sich die Antenne (6) zwischen dem inneren und dem äußeren Teil befindet.

18. Kommunikationseinsteckkarte nach Anspruch 17, **dadurch gekennzeichnet,** daß der äußere Teil des Griffs transparent ausgeführt ist und die Umlenkmittel (8) bildet.

19. Kommunikationseinsteckkarte nach einem der Ansprüche 16 bis 18, **dadurch gekennzeichnet,** daß sich die Antenne (6) im gebogenen Abschnitt des D - förmigen Griffs befindet.

20. Kommunikationseinsteckkarte nach den Ansprüchen 17 bis 19, **dadurch gekennzeichnet,** daß der äußere, transparente Teil des Griffs Haken besitzt, die beim Aufstecken auf den inneren Teil in entsprechende Aussparungen im inneren Teil eingreifen.

21. Kommunikationseinsteckkarte nach einem der Ansprüche 10 bis 20, **dadurch gekennzeichnet,** daß eine runde Leuchtdiode (17) mit halbkugelförmigem Kopf verwendet wird, die aus dem Kartenkörper heraus und in die Umlenkmittel hineinragt.

22. Kommunikationseinsteckkarte nach einem der Ansprüche 1 bis 21, **dadurch gekennzeichnet,** daß die eine Einrichtung zum Abstimmen der Antennenimpedanz auf die Impedanz der Sende- und Empfangseinrichtung vorhanden ist.

23. Kommunikationseinsteckkarte nach einem der Ansprüche 1 bis 22, **dadurch gekennzeichnet,** daß die Anzeigeneinrichtung so ausgelegt ist, daß verschiedene Betriebszustände durch verschiedene Farben und/oder unterschiedliche Blinksequenzen dargestellt werden können.

24. Kommunikationseinsteckkarte nach einem der Ansprüche 1 bis 23, **dadurch gekennzeichnet,** daß die Kommunikationseinsteckkarte eine Einrichtung zur Erfassung der Funkstreckenqualität aufweist, wobei die Funkstreckenqualität durch die Feldstärke der Basisstation am Ort der Kommunikationseinsteckkarte oder durch die Bitfehlerrate charakterisiert wird.

25. Kommunikationseinsteckkarte nach Anspruch 24, **dadurch gekennzeichnet,** daß auch die Funkstreckenqualität als Betriebszustand angezeigt wird.

26. Kommunikationseinsteckkarte nach Anspruch 24 oder 25, **dadurch gekennzeichnet,** daß die Kommunikationseinsteckkarte in der Lage ist, die ermittelte Funkstreckenqualität an das Gerät weiterzugeben, in das sie eingesteckt ist.

27. Kommunikationseinsteckkarte nach Anspruch 1 bis 26, **dadurch gekennzeichnet,** daß die Antenne gebogen ausgeführt ist, wobei die effektive Länge der Antenne ein Viertel der für die Funkkommunikation maßgeblichen Wellenlänge beträgt.

## Claims

1. A plug-in communication card, preferably a PCMCIA card, said card comprising a transmit and receive means (4) and an antenna (6 or 16) for radio communication, wherein said antenna projects at least partially beyond the actual card body (1), **characterized in that** the card comprises additionally a display means for displaying an operating state, said display means being integrated in a component together with the antenna and said component being simultaneously implemented as a handle for the plug-in communication card for removing said card from the device into which it is inserted, and said display means causing an illumination along the contour of the antenna.

2. A plug-in communication card according to claim 1, **characterized in that** the displayed operating state comprises at least one of the following states:

   - base station identified / not identified
   - data transmission active / not active.

3. A plug-in communication card according to claim 2, **characterized in that** the radio transmission takes place according to the DECT standard and that the effective antenna length is consequently approx. 4 cm.

4. A plug-in communication card according to claim 2 or 3, **characterized in that** the card is shielded by a metal layer and that this metal layer defines a conductive plane for the antenna from the point of view of high-frequency technology.

5. A plug-in communication card according to one of the claims 2 to 4, **characterized in that** means are provided for folding, rotating or bending the antenna so as to optimize the directional effect of the antenna.

**6.** A plug-in communication card according to claim 1 or 2, **characterized in that** the antenna is implemented as a frame antenna (16).

**7.** A plug-in communication card according to claim 6, **characterized in that** the frame antenna has an arcuate shape.

**8.** A plug-in communication card according to claim 6 or 7, **characterized in that** the geometry of the frame antenna is adapted to frequencies of about 1.9 GHz for radio transmission in the DECT standard.

**9.** A plug-in communication card according to one of the claims 1 to 8, **characterized in that** the antenna (6 or 16) is coated with an insulating layer.

**10.** A plug-in communication card according to claim 1 or 2, **characterized in that** the display means comprises at least one light-emitting diode (17) or at least one laser diode (17).

**11.** A plug-in communication card according to claim 10, **characterized in that** the display means comprises at least one light-emitting diode (17) or at least one laser diode (17) as well as a deflection means (8) for deflecting the light generated by said light-emitting diode or said laser diode.

**12.** A plug-in communication card according to claim 11, **characterized in that,** in the inserted condition of the card and when the user is sitting normally, the display means can only be viewed via the deflection means (8).

**13.** A plug-in communication card according to claim 11 or 12, **characterized in that** the deflection means is formed by the electric insulation covering the antenna.

**14.** A plug-in communication card according to claim 11, 12 or 13, **characterized in that** the deflection means (8) is transparent and scatters the light in a defined manner.

**15.** A plug-in communication card according to one of the claims 11 to 14, **characterized in that** the cross-section of the deflection means decreases as the distance from the light-emitting diode or the laser diode increases so as to support a uniform radiation of the light coupled into the deflection means.

**16.** A plug-in communication card according to one of the claims 1 to 15, **characterized in that** the shape of the handle corresponds approximately to the shape of the upper half of a letter "D" or to the shape of a letter "C".

**17.** A plug-in communication card according to claims 1 to 16, **characterized in that** the handle consists essentially of two parts, viz. an inner (5b) and an outer one, the inner part being fixedly connected to the car body and the outer part of the handle being attached to said inner part in a caplike manner, and the antenna (6) being located between said inner and said outer part.

**18.** A plug-in communication card according to claim 17, **characterized in that** the outer part of the handle is transparent and defines the deflection means (8).

**19.** A plug-in communication card according to one of the claims 16 to 18, **characterized in that** the antenna (6) is provided in the bent portion of the D-shaped handle.

**20.** A plug-in communication card according to claims 17 to 19, **characterized in that** the outer transpaent portion of the handle is provided with hooks engaging complementary recesses in the inner part when said outer part is attached to said inner part.

**21.** A plug-in communication card according to one of the claims 10 to 20, **characterized in that** a round light-emitting diode (17) provided with a semispherical head is used, said round light-emitting diode projecting beyond the card body and into the deflection means.

**22.** A plug-in communication card according to one of the claims 1 to 21, **characterized in that** a means is provided for adapting the impedance of the antenna to the impedance of the transmit-receive means.

**23.** A plug-in communication card according to one of the claims 1 to 22, **characterized in that** the display means is implemented such that various operating states can be represented by various colours and/ or different flashing sequences.

**24.** A plug-in communication card according to one of the claims 1 to 23, **characterized in that** the plug-in communication card is provided with a means for detecting the radio path quality, the radio path quality being characterized by the field strength of the base station at the location of the plug-in communication card or by the bit error rate.

**25.** A plug-in communication card according to claim 24, **characterized in that** also the radio path quality is displayed as an operating state.

**26.** A plug-in communication card according to claim 24 or 25, **characterized in that** the plug-in communication card is capable of transmitting the detected radio path quality to the device into which it has been inserted.

27. A plug-in communication card according to claims 1 to 26, **characterized in that** the antenna has an arcuate shape, the effective length of the antenna being a quarter of the wavelength which governs the radio communication.

**Revendications**

1. Carte enfichable de communication, de préférence carte PCMCIA, la carte présentant un dispositif d'émission et de réception (4) ainsi qu'une antenne (6 ou 16) pour la radiocommunication, l'antenne dépassant au moins en partie du corps de carte (1) proprement dit, **caractérisée** en ce que la carte présente en outre un dispositif d'affichage destiné à afficher un état de fonctionnement, le dispositif d'affichage étant, avec l'antenne, intégré dans une pièce et cette pièce étant conçue en même temps comme poignée pour la carte enfichable de communication afin d'extraire la carte de l'appareil dans lequel elle est enfichée, et le dispositif d'affichage produisant un éclairage le long du trajet de l'antenne.

2. Carte enfichable de communication selon la revendication 1, **caractérisée** en ce que l'état de fonctionnement affiché comprend au moins un des états suivants :

   - station de base détectée / non détectée,
   - transmission de données active / non active.

3. Carte enfichable de communication selon la revendication 2, **caractérisée** en ce que la radiotransmission s'effectue suivant le standard DECT et que l'on a donc une longueur effective d'antenne d'environ 4 cm.

4. Carte enfichable de communication selon la revendication 2 ou 3, **caractérisée** en ce que la carte est protégée par une couche métallique et que cette couche métallique forme un plan directeur pour l'antenne en technique des hautes fréquences.

5. Carte enfichable de communication selon une des revendications 2 à 4, **caractérisée** en ce qu'il est prévu un dispositif pour rabattre, faire tourner ou courber l'antenne afin d'optimiser la directivité de l'antenne.

6. Carte enfichable de communication selon la revendication 1 ou 2, **caractérisée** en ce que l'antenne est réalisée sous forme d'antenne cadre (16).

7. Carte enfichable de communication selon la revendication 6, **caractérisée** en ce que l'antenne cadre est réalisée en forme d'arc.

8. Carte enfichable de communication selon une des revendications 6 ou 7, **caractérisée** en ce que la géométrie de l'antenne cadre est conçue pour des fréquences situées autour de 1,9 GHz pour une radiotransmission en standard DECT.

9. Carte enfichable de communication selon une des revendications 1 à 8, **caractérisée** en ce que l'antenne (6 ou 16) est recouverte d'une couche isolante.

10. Carte enfichable de communication selon la revendication 1 ou 2, **caractérisée** en ce que le dispositif d'affichage présente au moins une diode électroluminescente ou une diode laser (17).

11. Carte enfichable de communication selon la revendication 10, **caractérisée** en ce que le dispositif d'affichage présente au moins une diode électroluminescente ou une diode laser (17) ainsi qu'un moyen déflecteur (8) pour dévier la lumière produite par la diode électroluminescente ou la diode laser (17).

12. Carte enfichable de communication selon la revendication 11, **caractérisée** en ce le dispositif d'affichage peut être vu exclusivement par l'intermédiaire des moyens déflecteurs (8) lorsque la carte est enfichée et que l'utilisateur est dans sa position de travail normale.

13. Carte enfichable de communication selon la revendication 11 ou 12, **caractérisée** en ce que les moyens déflecteurs sont formés par l'isolation électrique entourant l'antenne.

14. Carte enfichable de communication selon la revendication 11, 12 ou 13, **caractérisée** en ce que les moyens déflecteurs (8) sont transparents et diffusent la lumière de manière définie.

15. Carte enfichable de communication selon une des revendications 11 à 14, **caractérisée** en ce que la section transversale des moyens déflecteurs diminue plus on,s'éloigne de la diode électroluminescente ou de la diode laser afin de favoriser la diffusion régulière de la lumière envoyée dans le moyen déflecteur.

16. Carte enfichable de communication selon une des revendications 1 à 15, **caractérisée** en ce que la poignée a sensiblement la forme de la moitié supérieure de la lettre D ou la forme de la lettre C.

**17.** Carte enfichable de communication selon les revendications 1 à 16, **caractérisée** en ce que la poignée est formée pour l'essentiel de deux parties, à savoir d'une partie intérieure (5b) et d'une partie extérieure, la partie intérieure étant reliée de manière fixe au corps de carte et la partie extérieure de la poignée étant enfilée comme un capuchon sur la partie intérieure, et l'antenne (6) se trouvant entre la partie intérieure et la partie extérieure.

**18.** Carte enfichable de communication selon la revendication 17, **caractérisée** en ce que la partie extérieure de la poignée est transparente et forme les moyens déflecteurs (8).

**19.** Carte enfichable de communication selon une des revendications 16 à 18, **caractérisée** en ce que l'antenne (6) se trouve dans la partie courbée de la poignée en forme de D.

**20.** Carte enfichable de communication selon les revendications 17 à 19, **caractérisée** en ce que la partie extérieure transparente de la poignée possède des crochets qui s'engagent dans des évidements correspondants dans la partie intérieure, lorsque la partie extérieure est enfilée sur la partie intérieure.

**21.** Carte enfichable de communication selon une des revendications 10 à 20, **caractérisée** en ce que l'on utilise une diode électroluminescente (17) ronde avec une tête hémisphérique qui sort du corps de carte et pénètre dans les moyens déflecteurs.

**22.** Carte enfichable de communication selon une des revendications 1 à 21, **caractérisée** en ce qu'il existe un dispositif destiné à adapter l'impédance de l'antenne à l'impédance du dispositif d'émission et de réception.

**23.** Carte enfichable de communication selon une des revendications 1 à 22, **caractérisée** en ce que le dispositif d'affichage est conçu de telle sorte que différents états de fonctionnement peuvent être représentés par des couleurs différentes et/ou par des séquences de clignotement différentes.

**24.** Carte enfichable de communication selon une des revendications 1 à 23, **caractérisée** en ce que la carte enfichable de communication présente un dispositif de détection de la qualité de la liaison radio, la qualité de la liaison radio étant caractérisée par l'intensité de champ de la station de base à l'emplacement de la carte enfichable de communication ou par le taux d'erreurs sur les bits.

**25.** Carte enfichable de communication selon la revendication 24, **caractérisée** en ce que la qualité de la liaison radio est également affichée comme état de fonctionnement.

**26.** Carte enfichable de communication selon la revendication 24 ou 25, **caractérisée** en ce que la carte enfichable de communication est en mesure de transmettre la qualité détectée de la liaison radio à l'appareil dans lequel elle est enfichée.

**27.** Carte enfichable de communication selon les revendications 1 à 26, **caractérisée** en ce que l'antenne est arquée, la longueur effective de l'antenne représentant un quart de la longueur d'onde caractéristique de la radiocommunication.

*Fig. 1*

*Fig. 2*

*Fig. 3*